# DEMANDE DE BREVET EUROPEEN

(11) **EP 1 187 020 A1**
(43) Date de publication de la demande: **13.03.2002**
(21) Numéro de dépôt: 01400383.4
(22) Date de dépôt: 13.02.2001
(51) Int. Cl.: G06F 9/46

(54) **Service de communication permettant la transmission d'evenements entre elements logiciels de facon independante des applications**

(30) Priorité: 14.02.2000 FR 0001808
(71) Demandeur: ALCATEL, 75008 Paris (FR)
(72) Inventeur: Anquetil, Laurent Philippe, 75015 Paris (FR); Conte, Alberto, 75014 Paris (FR)
(74) Mandataire: Sciaux, Edmond

(57) **Abrégé**

Service de communication permettant la transmission d'événements depuis au moins un producteur de données vers au moins un consommateur de données caractérisé en ce qu'il comporte un module de répartition et un ensemble de modules de filtrage, le module de répartition possédant des moyens pour recevoir les événements et les transmettre vers l'ensemble de modules de filtrage, et chacun des modules de filtrage de cet ensemble ayant des moyens pour recevoir les événements, les filtrer selon un mécanisme de filtrage, et les transmettre vers certains des consommateurs de données.

## Description

La présente invention concerne la communication entre composants logiciels d'une application logicielle.

Très souvent, les applications logicielles ne sont guère prévues pour être évolutive. Elles sont en ce cas, bien souvent, monolithiques, c'est-à-dire qu'elles sont formées d'un unique composant logiciel, ou bien de plusieurs composants logiciels, mais dans ce dernier cas, il n'est pas recherché de rendre chacun de ces composants logiciels indépendants. Autrement dit, chaque composant de l'application logiciel est conçu dans le but d'être partie intégrante de l'application logicielle.

Il est toutefois connu d'essayer de rendre chacun des composants logiciels indépendants des autres. Pour ce faire, on réduit le couplage entre les différents composants constitutifs de l'application en établissant des interfaces bien précises entre eux et des mécanismes de communication leur permettant d'échanger des informations.

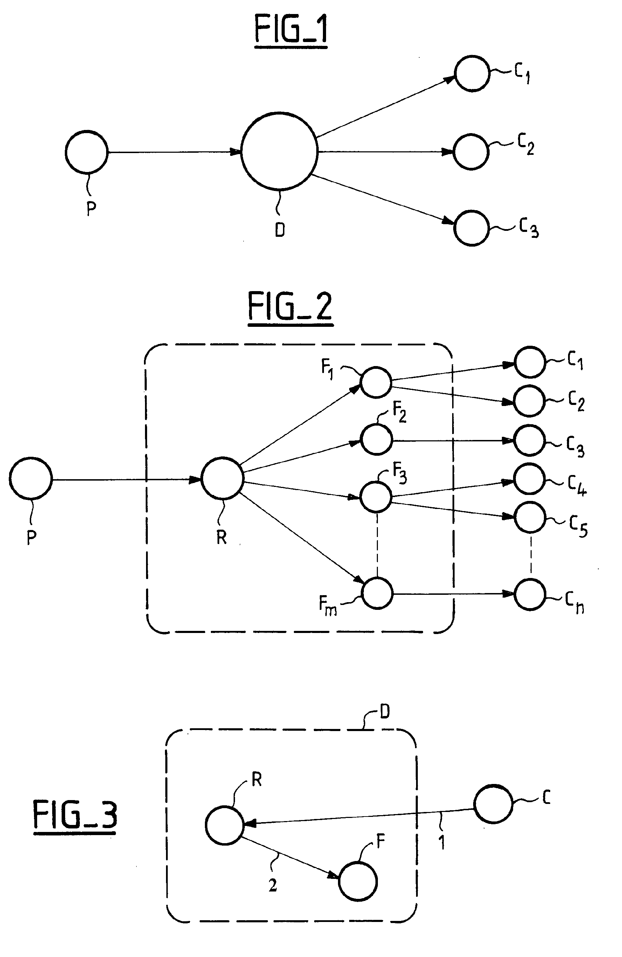

La figure 1 illustre un tel mécanisme. Ce mécanisme est décrit dans l'ouvrage de Erich Gamma, Richard Helm, Ralph Johnson et John Vlissides, « *Design Patterns - Elements of Reusable Object-Oriented Software* », paru aux éditions Addison-Wesley (5^{e} édition, 1995).

Selon ce document, les composants logiciels d'une même application (ou éventuellement de plusieurs applications) échangent des messages via un service de communication, D, généralement appelé Dispatcher ou dispatching event service, en anglais. Chaque composant logiciel peut être considéré comme un producteur de données, P, ou bien comme un consommateur de données, C₁, C₂, C₃ (ou *Observer*, selon la terminologie utilisée par cet ouvrage).

Bien évidemment, dans la pratique un même composant logiciel peut posséder les deux rôles, c'est-à-dire qu'il peut être à la fois, producteur de données et consommateur de données. Toutefois, pour la clarté de l'exposé, nous nous en tiendrons à des composants logiciels ayant soit un rôle de producteur de données, soit un rôle de consommateur de données.

Généralement, les données sont structurées en événements, c'est-à-dire en message émis de façon asynchrone, et répondant d'un format bien précis.

Selon cet état de la technique, les consommateurs de données C₁, C₂ et C₃ doivent s'enregistrer auprès du service de communication D, en précisant le type d'événements qu'ils souhaitent recevoir. De leurs cotés, les producteurs de données P, émettent des événements à destination du service de communication D, sans se préoccuper de leur destination finale : on a donc une délégation de la gestion des destinataires au niveau du service de communication D.

Ainsi, chaque fois que le producteur de données P émettra un événement au service de communication D, ce dernier aura pour charge de déterminer vers quels consommateurs de données l'événement doit être acheminé, en fonction des informations que les consommateurs de données ont précisées lors de leur enregistrement.

Toutefois, une telle solution n'est pas satisfaisante.

Le principal problème résulte du fait que la gestion du filtrage et de l'acheminement des événements est déléguée au service de communication qui est extérieur à l'application.

Plus précisément, cela oblige le service de communication à connaître le fonctionnement interne de l'application, alors même qu'il lui est extérieur. En effet, afin d'acheminer les événements vers le consommateur de données approprié, il doit mettre en oeuvre la politique d'acheminement des événements qui est désirée par l'application. Par conséquent, il n'y a pas une bonne division entre ce qui est spécifique à l'application et ce qui ne l'est pas, et le système global manque de flexibilité.

Par ailleurs, le serveur de communication D doit être à même d'interpréter les événements qui lui proviennent des producteurs de données P afin de pouvoir déterminer, à l'aide des informations préalablement fournies par les consommateurs de données C, vers lequel de ceux-ci il doit les acheminer.

Dans l'état de la technique, ceci peut être fait de deux façons différentes.

Selon une première solution, chaque type d'événement est mis en oeuvre sous la forme d'une classe différente. Le terme « classe » est ici entendu au sens de la programmation orientée objets. Par ailleurs, les consommateurs de données s'enregistrent auprès du serveur de communication pour une ou plusieurs classes.

Ainsi, en déterminant la classe de l'événement reçu d'un producteur de données, le serveur de communication peut décider des consommateurs de données vers lesquelles il doit acheminer l'événement reçu.

Un premier inconvénient d'une telle façon de faire est qu'elle ne permet pas un filtrage très fin puisque la nature des données contenue dans l'événement n'est pas analysée.

Un autre inconvénient est qu'elle nécessite la création de nombreuses classes d'événements, et est donc assez lourde à mettre en oeuvre.

Une autre façon de faire consiste donc à analyser, au niveau du serveur de communication, les données contenues dans événements reçus. En fonction des informations fournies par les consommateurs de données, le serveur de communication peut décider des consommateurs de données vers lesquelles il doit acheminer l'événement reçu. Il doit, pour ce faire, connaître la façon dont sont structurées les données à l'intérieur des événements. Comme celles-ci dépendent des applications, cela signifie que le serveur de communication doit avoir la connaissance approfondie des mécanismes internes des différentes applications qui utilisent ses services.

Conséquemment, une telle façon de faire implique une perte d'indépendance du serveur de communication vis-à-vis des applications, ainsi qu'une grande complexité du serveur de communication.

Aussi, les solutions de l'état de la technique ne sont guère satisfaisantes. Le but de la présente invention est de permettre la communication des événements entre un ou plusieurs producteurs de données vers un ou plusieurs consommateurs de données, à l'aide d'un serveur de communication indépendant des applications et offrant de bonnes performances en filtrage.

Pour ce faire, l'invention a pour objet un service de communication, permettant la transmission d'événements depuis au moins un producteur de données vers au moins un consommateur de données. Ce service de communication se caractérise en ce qu'il comporte un module de répartition et un ensemble de modules de filtrage, cet ensemble pouvant éventuellement être un singleton. Le module de répartition possède des moyens pour recevoir les événements et les transmettre vers l'ensemble de modules de filtrage, et chacun des modules de filtrage de cet ensemble a des moyens pour les recevoir, les filtrer selon un mécanisme de filtrage, et les transmettre vers certains des consommateurs de données.

De cette façon, chaque application logicielle peut spécifier au service de communication quel module de filtrage il désire utiliser. Ces modules de filtrage peuvent alors être spécifiques à l'application (ou, tout du moins, à un type d'applications donné), et mettre en oeuvre des procédés de filtrages nécessitant l'analyse des données contenues dans les événements, tout en gardant la généricité du serveur de communication puisque seuls les modules de filtrage sont impactés.

Ainsi qu'il peut être compris par l'homme du métier, les différents moyens dont disposent les modules de filtrage et le module de répartition peuvent être mis en oeuvre par des fils d'exécution (ou *thread*, selon le vocabulaire anglais consacré). Autrement dit, les modules de filtrage et le module de répartition peuvent s'exécuter de façon parallèle et indépendante.

Un autre objet de l'invention est un procédé permettant à un consommateur de données de s'enregistrer auprès d'un tel service de communication. Ce procédé comporte :
- Une première étape consistant à l'émission par le consommateur de données d'un message d'enregistrement au module de répartition. Le message contient des informations relatives à un mécanisme de filtrage.
- Une seconde étape, consistant à l'émission par le module de répartition vers un module de filtrage déterminé à partir de ces informations, d'informations relatives au consommateur de données permettant son enregistrement.

Selon une mise en oeuvre de l'invention, ces modules de filtrage peuvent être ajoutés par les applications, notamment de façon dynamique, c'est-à-dire durant la durée de vie du système, sans le stopper.

L'invention a donc aussi pour objet un procédé permettant l'utilisation du service de communication par un consommateur de données. Ce procédé comporte :
- une première étape consistant à l'émission par celui-ci, d'un message contenant des informations relatives à au moins un module de filtrage, vers le module de répartition,
- une deuxième étape consistant pour le module de répartition à transmettre les événements vers le (ou les) module(s) de filtrage, et,
- une troisième étape consistant pour le (ou les) module(s) de filtrage à filtrer lesdits événements puis les transmettre vers le consommateur de données.

D'autres caractéristiques et avantages de l'invention apparaîtront de façon plus claire dans la description qui va suivre, en connexion avec les figures annexées.

La figure 1, déjà commentée, illustre une architecture de serveur de communication, conforme à l'état de la technique.

La figure 2 schématise un serveur de communication conforme à la présente invention.

La figure 3 illustre le procédé d'enregistrement d'un nouveau module de filtrage auprès du serveur de communication.

Le service de communication, référencé D sur la figure 2, est constitué d'une part d'un premier élément logiciel, appelé par la suite module de répartition et référencé R, et d'autre part un ensemble d'éléments logiciels appelés modules de filtrage et référencés F₁, F₂, F₃... Fₘ, où n est le nombre de ces modules de filtrage.

Le répartiteur R reçoit des événements de la part d'un ou plusieurs producteurs de données P. A leur réception, il les transmet directement aux modules de filtrage, sans effectuer d'analyse.

Les modules de filtrages, F₁ à Fₘ, quant à eux, disposent de moyens pour analyser les données contenues dans ces événements. Chacun d'entre eux peut mettre en oeuvre des mécanismes de filtrage différents. En fonction de l'analyse qu'ils effectuent et des mécanismes de filtrage qu'ils mettent en oeuvre, les modules de filtrage déterminent alors, pour chaque événement reçu, s'il doit être transmis ou non. Dans le cas où l'événement n'est pas filtré (c'est-à-dire qu'il doit être transmis), il est alors transmis aux consommateurs de données, C₁, C₂, C₃... Cₙ qui sont enregistrés auprès du module de filtrage en question.

Contrairement aux solutions de l'état de la technique, il n'est nul besoin ici de déterminer un sous-ensemble de consommateurs de données vers lequel on doit transmettre les événements après filtrage : ils sont transmis à tous les consommateurs de données enregistrées auprès du module de filtrage concerné. On comprend donc que la structure des modules de filtrage, et *a fortiori,* du service de communication dans son ensemble, s'en trouve simplifiée.

La figure 3 représente le mécanisme mis en oeuvre lorsqu'une application logicielle veut s'enregistrer auprès du serveur de sécurité.

Une application logicielle peut être vue, du point de vue du service de communication, comme un ensemble de consommateurs de données et de producteurs de données.

Aussi, lorsqu'une application désire utiliser le service de communication, elle doit procéder à l'enregistrement d'un certain nombre d'éléments logiciels en tant que consommateurs de données par rapport à ce service de communication.

Ce mécanisme d'enregistrement est illustré par la figure 3.

Dans une étape, illustrée par la flèche 1, le consommateur de données C s'enregistre auprès du service de communication D, en envoyant un message d'enregistrement au module de répartition R. Ce message d'enregistrement contient des informations relatives au mécanisme de filtrage désiré, et notamment il peut contenir un identifiant du module de filtrage qui doit être utilisé. Cet identifiant est par exemple un pointeur, ou une adresse.

Ces informations peuvent en outre contenir des paramètres du mécanisme de filtrage (un critère de tri, par exemple.)

Enfin, les informations fournies par le message d'enregistrement contiennent un identifiant du consommateur de données C.

Ensuite, dans une étape illustrée par la flèche 2, le module de répartition R transmet au module de filtrage F, déterminé par les informations fournies par le consommateur de données C, l'identifiant de ce dernier, qui lui a été transmis à l'étape précédente.

Le module de répartition R peut, de surcroît, transmettre au module de filtrage F, d'autres informations, notamment les éventuels paramètres fournis par le consommateur de données.

Le module de filtrage F peut alors mémoriser toutes ces informations. Selon l'invention, on peut en effet prévoir que le module de filtrage F comporte un moyen de mémorisation (par exemple, une zone de mémoire organisée sous la forme d'une table) listant l'ensemble des consommateurs de données C qui se sont ainsi enregistrés en le choisissant.

Ainsi, lorsque ce module de filtrage recevra, de la part du module de répartition R, un événement, il sera en mesure de le transmettre à cet ensemble de consommateurs de données, éventuellement après prise en compte de paramètres propres qui leur sont associés.

Lorsqu'une application veut utiliser le service de communication, elle peut, préalablement à l'enregistrement des consommateurs de données, enregistrer un ou plusieurs modules de filtrage. Elle peut de plus enregistrer des modules de filtrage, même après avoir commencé à utiliser le service de communication.

Pour ce faire, l'application, notamment au travers des consommateurs de données, peut adresser un message au module de répartition. Ce message peut contenir des informations relatives au module de filtrage, et notamment un identifiant (un pointeur, une adresse...). Le module de répartition possède donc des moyens pour recevoir de tels messages, ainsi que des moyens pour ajouter ce nouveau module de filtrage à l'ensemble des modules de filtrage qu'il gère.

Plus précisément, le module de répartition peut posséder un moyen de mémorisation lui permettant de lister l'ensemble des modules de filtrages (grâce à leur identifiant), en les associant à d'éventuels paramètres.

Ainsi, chaque fois que le module de répartition reçoit un événement de la part d'un producteur de données, il est à même, à l'aide de ce moyen de mémorisation, de transmettre cet événement à l'ensemble des modules de filtrage.

## Revendications

1. Service de communication (D), permettant la transmission d'événements depuis au moins un producteur de données (P) vers au moins un consommateur de données (C₁, C₂... Cₙ), **caractérisé en ce qu'**il comporte un module de répartition (R) et un ensemble de modules de filtrage (F₁, F₂... Fₘ), ledit module de répartition possédant des moyens pour recevoir lesdits événements et les transmettre vers ledit ensemble de modules de filtrage, et chacun des modules de filtrage dudit ensemble ayant des moyens pour recevoir lesdits événements, les filtrer selon un mécanisme de filtrage, et les transmettre vers certains desdits au moins un consommateurs de données.

2. Service de communication selon la revendication précédente, dans lequel chacun des modules de filtrage dudit ensemble possède des moyens pour établir son propre mécanisme de filtrage en fonction d'informations transmises par ledit au moins un consommateur de données audit service de communication.

3. Service de communication selon l'une des revendications précédentes, dans lequel chacun des modules de filtrage dudit ensemble possède des moyens pour mémoriser les consommateurs de données vers lesquels il doit transmettre lesdits événements.

4. Service de communication selon l'une des revendications précédentes, **caractérisé en ce que** ledit module de répartition possède des moyens pour recevoir de la part dudit au moins un consommateur de données, un message contenant des informations relatives à un nouveau module de filtrage, et pour ajouter ledit nouveau module de filtrage audit ensemble de modules de filtrage.

5. Procédé d'enregistrement d'un consommateur de données auprès d'un service de communication (D), ledit service de communication comportant un module de répartition (R) et un ensemble de modules de filtrage (F), ledit procédé comportant :
• Une première étape (1) consistant à l'émission, par ledit consommateur de données (C) d'un message d'enregistrement audit module de répartition (R), contenant des informations relatives à un mécanisme de filtrage,
• Une seconde étape (2), consistant à l'émission, par ledit module de répartition vers un module de filtrage déterminé à partir desdites informations relatives à un mécanisme de filtrage, d'informations relatives audit consommateur de données (C) permettant son enregistrement.

6. Procédé d'utilisation par un consommateur de données (C); d'un service de communication (D) comportant un module de répartition (R) apte à recevoir des événements, ledit procédé comportant :
• une première étape consistant à l'émission par ledit consommateur de données, d'un message contenant des informations relatives à au moins un module de filtrage (F), vers ledit module de répartition (R),
• une deuxième étape consistant pour le module de répartition (D) à transmettre lesdits événements vers ledit au moins un module de filtrage, et,
• une troisième étape consistant pour ledit au moins un module de filtrage à filtrer lesdits événements puis les transmettre vers ledit consommateur de données.
